# EUROPEAN PATENT APPLICATION

(11) **EP 2 752 476 A1**
(43) Date of publication of application: **09.07.2014**
(21) Application number: 11871650.5
(22) Date of filing: 01.09.2011
(51) Int. Cl.: C10B 49/02, C10J 3/00, C10B 53/04

(54) **GASIFICATION-PYROLYSIS DUAL REACTOR DEVICE**

(71) Applicant: Guradoor S.L., 38390 Santa Ursula (Tenerife) (ES)
(72) Inventor: GONZÁLEZ GONZÁLEZ, Daniel, 38390 Santa Ursula (Tenerife) (ES)
(74) Representative: Gil-Vega, Victor
(86) International application number: PCT/ES2011/070614
(87) International publication number: WO 2013/030412

(57) **Abstract**

The device herein described includes: a feeder for feeding wet crushed coal from an upper feed nozzle (1) into two branches (1 a and 1 b) provided with suitable mills; an element for mixing/distributing screened coal (2), located downstream of the nozzle (1); a gasification chamber (3) located downstream of the aforementioned element (2) where the screened material is oxidised by means of the supply of oxygen at approximately 1,800°C - 1,900°C, said chamber (3) being divided into two sub-chambers by a gas diffusion membrane; a cyclone separator (4) located downstream of the chamber (3), which retains the solid particles present in the synthesis gas; an essentially pyrolytic chamber (5) where the solids carried from the cyclone separator (4) are pyrolysed, the residual gases being fed back into the chamber (3); and a sawtooth screen (6) which collects the solid waste, storing same as slag in a storage element (7).

## Description

The invention relates to a gasification-pyrolysis dual reactor device especially intended to be used in a gasification-pyrolysis procedure, which is fed with a crushed coal mixture to obtain a synthesis gas, which essentially consists of CO, CO₂ and H₂, using the solar energy obtained at a high-temperature solar thermoelectric plant as steam and oxygen.

Basically, the coal gasification and pyrolysis reactions occur within the dual reactor device of the invention, such coal being crushed at the device to obtain a synthesis gas. The steam originating from a solar high-temperature thermal power plant is fed to the gasification-pyrolysis dual reactor device which has already been fed with crushed coal, which is partially oxidized with O₂, preferably obtained at an electrolysis stage, and with the steam coming from the solar plant, at a gasification chamber provided inside the dual reactor device. The gas thus obtained basically consists of H₂, CO, with small amounts of CO₂, CH₄, H₂S and free carbon. To eliminate them, and for the conditioning of the synthesis gas, a pyrolysis process is performed at the dual reactor device itself, to essentially eliminate the free carbon, the H₂S and part of CO₂. Briefly explained, the devolatilization process and the release of carbon and hydrogen occur between 38 and 705°C, while C y H₂O(g) are released at a temperature ranging from 705 to 1480°C and C and O₂ between 1480 and 1815°C.

CH₄ + CO + CO₂ + O₂ →CO + CO₂ + H₂

The dual reactor device according to the invention comprises the necessary catalysers to allow the occurrence of the different reactions, as well as the necessary means to maintain its integrity, such as refractory cladding, insulating materials, refrigerating sleeves, etc. On the other hand, the dual reactor device according to the invention incorporates a cyclone separator to eliminate any solid waste of the synthesis gas obtained insulating materials, refrigerating sleeves, etc. On the other hand, the dual reactor device of the invention incorporates a cyclone separator to eliminate any solid waste from the synthesis gas obtained.

Similarly, the dual reactor device of the invention allows to collect the residues obtained with the process previously described, that are stored for their subsequent reuse in other processes, for instance, those processes where ashes are used, or for their recycling as fertilisers.

The gasification of a solid product is a thermo-chemical process which encompasses the thermal decomposition of the organic matter and the action of a gas which mainly reacts with the carbon residue obtained from such thermal decomposition.

The generic term "gasification" encompasses a large variety of processes, where a broad range of different products can be obtained. On the basis of the gasifier agent used, a first classification of the gasification process can thus be obtained:
- With air: the partial combustion with air leads to an exothermic reaction which produces a gas with a low heating power, which can be used for energy-related purposes.
- With oxygen: a gas with an average heating power is obtained, although it is of a better quality, since it is not diluted with N2. It can be used, apart from the energy-related applications, as a synthesis gas to obtain methanol.
- With steam and/or oxygen (or air): a H2- and CO-rich has is obtained, which can be used as a synthesis gas to obtain different compounds (ammonia, methanol, gasolines, etc).
- With hydrogen: A gas with a high energy content is obtained, which can be used as a substitute for natural gas, since it has a large percentage of methane.

Another criterion used to obtain an interesting classification of the gasification processes is based on the relative movement of the gasifier agent and the gasified solid agent inside the gasification chamber. In accordance with this criterion, the main types of gasifiers are: downdraft mobile bed gasifiers (also known as fixed bed gasifiers) or updraft gasifiers, and fluidized bed gasifiers. Other types of gasifiers, that are used to a lesser extent, are rotary furnaces, cyclone reactors, circulating fluidized bed and dragging gasification systems, etc.

A large number of reactions occur during the gasification process, and the relative importance of such reactions depends on the operating conditions and the gasifier agent used; however, they can be broadly divided into the three blocks or stages usually comprised by a gasification process:
- Pyrolysis or thermal decomposition where, by means of heating, the original solid is decomposed into a mixture of solid, liquid and gas. The solid material obtained at this stage is usually named char and the liquid residues, owing to the majority presence of tars and condensable vapours, are known as tar.
- Oxidation or combustion. It happens when the gasifier agent is an oxidising product, such as oxygen or air, and involves the whole series of oxidizing reactions, both of an homogeneous and of an heterogeneous type, which are mainly of an exothermal nature, by which the heat necessary for the maintenance of the process is generated.
- Reduction or gasification. This stage comprises the solid-gas or gas phase reactions, by which the solid residue becomes gas. These are basically endothermic reactions, and some of them occur to a lesser extent, or they occur only under certain conditions, as it is the case with some hydrogenation and/or reforming reactions.

The oxidation and reduction stages can be jointly considered as a single gasification stage, where all kinds of possible reactions between the char and the gaseous mixture present may occur.

There are several factors that may influence the gasification process, and a distinction should be made between those which refer to the operating mode and the gasified solid, and those which are inherent to the design of the gasification chamber and the ancillary equipment.

Temperature is a significant factor at all stages and, consequently, for the final performance of the process. Specifically, the proportions between char, tar and gas in the pyrolysis products are closely related to the heating speed and the final temperature reached. As a general idea, it can be stated that, at high heating speeds and when the final temperature is high, the product basically obtained is a gas, while at lesser heating speeds and lower final temperatures, liquid or solid products are mainly obtained. As far as fluidized bed gasifiers are concerned, the heating speeds normally obtained are high (up to thousands of EC/s), while in the case of mobile bed reactors, the heating speeds obtained are usually moderate (within the of 0.2 - 0.5 EC/s range).

Strictly speaking, during the gasification stage, and considering the reversible nature of most reactions, temperature influences the reaction balances. In general terms, and for different fuels, it can be affirmed that a temperature increase favours the increase in the content of H₂ and CO in the gas obtained, to the detriment of CH₄ and H₂O.

In general terms, an increase in pressure represents a disadvantage for gasification reactions, as the proportion of hydrocarbons and tars is also increased. Mobile bed gasifiers usually operate at atmospheric pressure, while the fluidized bed units use to operate under pressure, reaching 30 bar in some cases.

The gasification agent/residue ratio is one of the most important parameters of the gasification process, especially in case that the process is self-provisioned by means of a partial oxidation, either with air or with oxygen, of the treated residue. When the values of this parameter are extremely low, the sufficient amount of energy to keep the process operating under appropriate conditions may not be generated, thus leading to a decrease in the performance. On the other hand, when air is used as the gasification agent, there is also a dilution effect on the part of the N₂. Therefore, each process includes an optimum value of the gasification agent/residue ratio, which is basically dependant on the composition of the gasified residue. Thus, for instance, in the case of forest biomass, it has been noticed that the optimum air/biomass relationship by weight ranges between 0.5 and 1.6 for the fluidized bed gasifiers, and around 1.5 in the case of mobile bed gasifiers.

Thus, it is possible to offset, on the one hand, the increase in temperature, which entails a decrease in the ratio of condensable and solid residues generated during the pyrolysis stage and, on the other hand, the poorer quality of the gas obtained.

On the other hand, the ash content provides information about the amount of solids that must be removed from the gasification reactor per unit of mass processed. Although residues with up to a 24% of ash content have been gasified, it is not advisable to exceed a level of 10%. This ash content must be removed from the gasification reactor, to prevent their accumulation. In the case of mobile bed gasification reactors, they are extracted from the bottom, and in the case of fluidized bed reactors, the gas speed must guarantee the dragging of the ashes. One of the most salient properties of the ashes, in this respect, is their melting point. In case that it is exceeded, slag could be generated, which could obstruct the equipment. Furthermore, as the ashes are of an inert nature, they do not participate in the chemical balances of the gasification reactions, but they may exercise a catalytic effect, accelerating the gasification reaction of the carbonaceous residue with steam, especially when there are metal oxides like K₂O, CaO, MgO, P₂O₅, etc.

Similarly, it is necessary to take into account that the process involves the heating of particles, that reagents will be spread towards the particle and that products will be spread from such particle towards the gaseous medium which surrounds it, and also that solid-gas reactions occur on the solid surface. Therefore, the particle size influences the amount of time necessary to allow the process to occur and the reactor volume which is appropriate to that effect. In the case of fluid beds, this parameter also affects the minimum fluidisation speed. To modify the particle size, solutions like densification and milling could be considered, but these possibilities also involve additional expenses. On the other hand, scarcely dense residues may generate problems related to the formation of preferential channels or make the fluidisation more difficult. In the case of fixed beds, load loss problems may occur, as well as the collapse of the movement of the bed, depending on the shape of the particles.

The reactions involved in the gasification of coal are:
- C + ½ O₂ →CO ΔHr = -9,25 MJ/Kg
- C + CO₂ →2CO ΔHr = 14,37 MJ/Kg
- C + H₂O →CO + H₂ ΔHr = 10,94 MJ/Kg
- CH₄ + ½ O₂ →CO + 2H₂ ΔHr = -35,7 MJ/kmol
- H₂ + ½ O₂ →H₂O ΔHr = -242 MJ/kmol
- CO + ½ O₂ →CO₂ ΔHr = -283 MJ/kmol
- CH₄ + H₂O →CO + 3H₂ ΔHr = 206 MJ/kmol
- CO + H₂O →CO₂ + H₂ ΔHr = -41,1 MJ/kmol

Among the main types of gasification reactors, we could mention those of the fluidized bed type, where the solid is suspended in gas. In this case, there are no more or less differentiated areas where the different processes, namely drying, pyrolysis, etc. are performed. Each particle is instantaneously/consecutively/simultaneously subject to these processes at any point of the gasification reactor, once it has been introduced in such reactor, and the ashes are finally elutriated by the emerging gas. These characteristics of a high reaction temperature, apart from an excellent mixing capability, make that the temperature and conversion profiles are uniform throughout the reactor, allowing a precise control of the operating conditions. This is also the underlying reason of the specific capability (Kg of solid/m³ of reactor) compared with other types of reactors.

Even though other types of gasification reactors are used, the current trend tends to reunite the pyrolysis and oxidation areas within a single space, so that all the pyrolysis products are simultaneously produced and burnt, while the reduction takes place at a lower area, in the same manner as the traditional downdraft process.

Thus, the object of this invention is to provide a gasification-pyrolysis dual reactor device which combines the advantages of the different types of reactors presently known, obtaining a synthesis gas which is essentially free from tars and which allows to work with solid initial materials with a high moisture content, without the need for the expensive prior drying process and without jeopardizing the performance of the final process, using coal for that purpose, wherein the reagents necessary for the different processes and the energy required, in the form of steam, are obtained from a high temperature solar power plant. To that effect, the reactor device of the invention allows to maintain the optimum temperature, heating speed and residence time without encountering the problems that are usually related to this type of systems, such as the deposition of slag at the lower elements of the system, the loss of volatile matters and the processes related to the pulverization and drying of the initial material.

Document EP 98949009.9 relates to a procedure and device to obtain fuel gas, synthesis gas and reduction gas from renewable and fossil fuels, other biomasses, litter or sludge, through their combustion at a burner, adding oxygen gas and/or gases containing oxygen at substoichiometric proportions exceeding the melting temperature of the inorganic fractions, to obtain a gasification medium containing CO₂ and H₂O, where the fuel and/or gas are rotated upon their entrance in the combustion chamber, and the liquid mineral components obtained are projected against the burner wall arranged in a substantially vertical position, and such components are separated from the gasification medium thus obtained; the gasification medium is routed towards a gasification reactor through a central opening made on the bottom of the combustion chamber, where this medium forms an immersion jet; the separated liquid components are evacuated through the central opening of the bottom of the combustion chamber, and they are dragged along by the immersion jet of the gasification medium as slag droplets, to be evacuated simultaneously with the gas and accelerated against the bottom of the reactor, where they accumulate until they are removed; the gasification medium is fed with fuel dust containing coal at the gasification reactor, and during the development of the gasification reaction, the carbon dioxide is reduced to obtain carbon monoxide and steam; the immersion gas jet is deflected above the bottom of the reactor, and the gasification gas obtained at the upper part of the reactor is evacuated, to be subsequently transformed, after the appropriate dusting off and chemical purification, in fuel gas, synthesis gas or reduction gas.

Document EP 92121724.6 describes a set of facilities for the production of synthesis gas from a carbonous material, comprising a system to obtain a high concentration of solar energy at an elongated, high-temperature focal area, a solar gasification reactor with upper and lower regions, containing, at least, a transparent portion which may transmit a highly concentrated solar radiation; means to allow the projection of such elongated, high temperature focal area within the reactor, nozzle means located at the upper region of the reactor; means for the injection of a dispersion of a specific carbonous material within the reactor, through the said nozzle means; and evacuation means for the removal of the synthesis gas product from the upper region of the reactor.

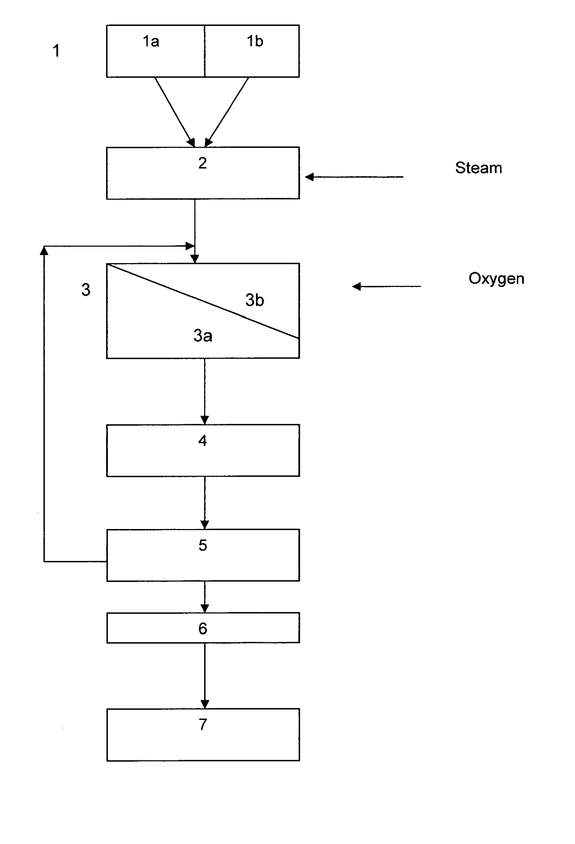

The object of the invention will be now more particularly described with reference to Figure 1 attached, which shows an embodiment of this dual reactor device.

Generally speaking, the gasification and pyrolysis reactions undergone by the wet milled coal within the dual reactor device are initiated through the feeding to the device of steam coming from a high temperature solar thermal power plant, such steam being fed through the gasification/pyrolysis dual reactor through the appropriate nozzles. Before the feeding of steam, the reactor device is fed with wet crushed coal. To that effect, an upper feeding nozzle (1) has been provided, split in two branches, (1a) and (1b) and inside which the crushed carbon is screened to obtain an appropriate particle size of 90 mesh and 490 mesh respectively at each one of the branches (1a, 1b), preferably by means of a jaw crusher and ball mill with a 90 mesh screening at one of the branches and a ball mill with a 490 mesh screening at the other one. The material resulting from the screening is collected on a screened coal mixing/distribution item (2) located downstream the feeding and milling nozzles (1), and the screened coal falls inside the mixing/distribution item (2) both as a result of the fact that part of the steam fed has forced a downwards circulation of the coal dust and due to the weight of the dust itself, and such circulation of gas fosters the flow of coal particles, minimising their deposition at the walls of the mixing/distribution item (2). The above-mentioned mills, as well as the mixer, are supplied with the energy required for their operation, such energy being preferably obtained from a high temperature solar power plant.

While the downwards steam coming from the item (2) maintains this flow of coal particles at an approximate temperature of 220-250°C, and supplying additional steam coming from the solar plant, the screened and wet initial material enters into the chamber (3), which is essentially a gasification chamber, where such initial material is partially oxidised through an additional supply of oxygen, preferably coming from an electrolysis device associated to the solar power plant. The interior of this chamber (3) is maintained at a temperature of approximately 1,800°C-1,900°C thanks to the high temperature of the steam fed from the solar plant. The interior of the chamber (3) is provided with a refractory cladding, to maintain the inner temperature, as well as an insulating cladding on the outer part, to minimise heat losses caused by radiation to the exterior surface of the walls. In a preferred embodiment of the invention, the refractory material of the chamber (3) is based on an alumina, silica and calcareous fibre cement, preferably of the Superboard® type, maintaining the insulation, with dimensional stability, up to 3,500°C.

The chamber (3) is divided into two sub-chambers (3a, 3b) by means of a gas-diffusion membrane which allows to keep separated the H₂-based and the carbon-based (CO₂, CO) gases obtained as a mixture of synthesis gas

CH₄ + CO + CO₂ + O₂ →CO + CO₂ + H₂

so that the hydrogen is re-circulated from the reactor towards the exterior, to be used for other chemical processing operations or to be directly used as fuel.

Downstream of such chamber (3), a cyclone separator (4) retains the solid particles present at the synthesis gas and, operating at a temperature of 600°C, which is maintained by the gas inside the unit, drags the solid matter towards an essentially pyrolitic chamber (5). The small amounts of CH₄, H₂S and free carbon that may remain as residues in the synthesis gas are subject to a pyrolysis treatment inside the chamber (5) of that same dual reactor, essentially eliminating free carbon, H₂S and part of CO₂. Briefly speaking, the devolatilisation and the release of carbon and hydrogen occurs between 38 and 705°C, in the case of C and H₂O(g) the release occurs between 705 and 1480°C, and in the case of C and O₂, between 1480 and 1815°C. Residual gases are fed back to the chamber (3).

Subsequently, the solid remains of the simultaneous gasification and pyrolysis processes cross a sawtooth screen (6) and are collected as slag and ashes inside an storage element (7) for their subsequent reuse, for instance in processes to obtain concrete, where ashes are used, or for their recycling as fertilisers.

The interior of the chamber (3) houses the appropriate catalysers that allow the occurrence of the different reactions, as well as the means required to maintain their integrity, as refractory cladding, insulating materials, refrigerating sleeves, etc. This is also applicable to the chamber (5).

The dual reactor device according to the invention allows the recirculation obtained from one chamber to another of the intermediate residual gases, so that the flow or dragged flow regime allows the continuous feeding of coal, and to easily extract the slag from all the chambers, reducing the synthesis gas losses caused by the output of the slag.

Thus, the dual reactor device herein described allows a low residence time, within a range of approximately 1 to 7 seconds, and the flow regime drags the coal particles through the reactor, operating at a gas temperature of 1,000-1,900°C, which allows to extract the ashes as melted sludge and avoid the formation of tars and hydrocarbons, minimising the formation of methane, since the production of this latter involves an undesired release of energy.

As it will be perfectly known by any person skilled in the art, the size of the dual reactor device of the invention will be related and adapted to the particle size, the reactivity of the fuel, the reaction temperatures and the speed of the gas phase, and all these characteristics define the time required to allow the occurrence of the gasification reactions. Therefore, the residence time within the reactor is one of the parameters to be guaranteed by means of the described design.

An exemplary embodiment according to the above-mentioned described design allows to obtain the following functional characteristics:
T= approx. 1,870°C
Efficiency= 69%.
CO: 60-64% v/v
H₂: 26-27% v/v
CH₄: 0-0.1 % v/v
CO₂: 6-7% v/v

Global reaction:
C + 0.38 H₂O + 0.36 O₂ →0.38 H₂ + 0.90 CO + 0.10 CO₂ + 0.00 CH₄

In a preferred embodiment of the invention, the temperatures recommended to carry out processes inside the previously mentioned dual reactor device are obtained thanks to a high-temperature solar plant and, similarly, the required reagents, steam, oxygen, hydrogen, etc. are derived from a procedure for the obtaining of by-products of the aforementioned solar plant, and preferably, the procedure described in the Spanish Patent application No. 201031280.

The heat released from the reactor corresponds to an energy portion of the heating power of the fuel used, in this case 4,895 Kcal/Kg, which is neither dragged by the gases and slag as chemical energy or sensitive heat, nor it is used in the reactions. Thus, a first touchstone for the estimation of the heat that must be released through the walls of the reactor by unit of time is the maximum power generated with all the heating power of the fuel used. For that purpose, the walls of the device may optionally comprise a heat flow regulating coil, provided that the flow and the pressure inside the coil are appropriate for the design conditions and the materials used, that the pressure inside the coil is sufficient to maintain the water in its liquid state in all the areas of the dual device, the temperature of each material is within the operating temperature range of such material and the total final thickness of the wall has the minimum value. The incorporation of the coil into the reactor wall is not relevant for the purpose of the global energy efficiency of the gasification unit.

## Claims

1. Coal gasification-pyrolysis dual reactor device, **characterised in that** it incorporates the following items:
A feeder which feeds wet milled coal from an upper feeding nozzle (1) split into two branches (1 a) and (1 b), which includes a jaw crusher and ball mill inside one of the said branches, and a ball mill inside the other branch, to mill the initial coal material;
A screened coal mixing/distribution item (2) located downstream of the feeding and milling nozzles (1), wherein the screened coal falls inside said mixing/distribution item (2) both as a result of the steam fed as dragging gas and to the weight of the dust itself, and such circulation of gas fosters the flow of coal particles, minimising their deposition at the walls of the mixing/distribution item (2);
A chamber (3), essentially intended for gasification purposes, located downstream of the item (2) where the wet screened material is partially oxidised through an additional supply of oxygen, at a temperature of approximately 1,800°C-1,900°C, the interior of the chamber (3) being provided with a refractory cladding, to maintain the inner temperature, as well as an insulating cladding on the outer part, to minimise heat losses caused by radiation to the exterior surface of the walls; the chamber (3) is divided into two sub-chambers (3a, 3b) by means of a gas diffusion membrane which allows to separate H₂- and carbon-based gases (CO₂, CO) obtained as a mixture of synthesis gas;
a cyclone separator (4) located downstream of the chamber (3), which retains the solid particles present in the synthesis gas, which operates at a temperature of 600°C which is maintained by the gas inside the unit;
an essentially pyrolytic chamber (5) where the solids carried from the cyclone separator (4) are pyrolysed, the free carbon, H₂S and part of CO₂ being essentially eliminated, and the residual gases being fed back into the chamber (3);
a sawtooth screen (6) which collects the solid waste obtained from the simultaneous gasification and pyrolysis processes, and which is subsequently stored as slag and ashes in an storage element for their subsequent reuse.

2. A coal gasification-pyrolysis dual reactor device according to claim 1, **characterised in that** 90 mesh (1a) y 490 mesh (1b) screens are arranged inside each one of the branches (1a, 1b), respectively, of the feeding nozzle (1), for the screening of the coal.

3. A coal gasification-pyrolysis dual reactor device according to claim 1, **characterised in that** it allows the recirculation of the hydrogen present at the chamber (3) from the reactor to the outside, so that it may be used for other chemical processing operations or to be directly used as fuel.

4. A coal gasification-pyrolysis dual reactor device according to claim 1, **characterised in that** the operating temperature of the item (2) falls within the 220-250°C range, the relevant temperature of the chamber (3) is maintained at 1,800°C-1,900°C the temperature of the cyclone separator (4) is 600°C.

5. A coal gasification-pyrolysis dual reactor device according to claim 1, **characterised in that** the refractory material of chambers (3) and (5) is based on an alumina, silica and calcareous fibre cement, preferably of the Superboard® type, maintaining the insulation, with dimensional stability, up to 3,500°C.

6. A coal gasification-pyrolysis dual reactor device according to claim 1, **characterised in that** its walls also include a coil for the regulation of the heat flow.

7. A coal gasification-pyrolysis dual reactor device according to claim 1, **characterised in that** it allows the recirculation of the intermediate residual gases obtained from one chamber to another, so that the flow or dragged flow regime allows the continuous feeding of coal, and to easily extract the slag from all the chambers.
